(19) **Europäisches Patentamt**

**European Patent Office**

**Office européen des brevets**

(11) Publication number: **0 362 375 B1**

(12) **EUROPEAN PATENT SPECIFICATION**

(45) Date of publication of patent specification: **19.04.95**

(51) Int. Cl.⁶: **C04B 35/56**

(21) Application number: **88902221.6**

(22) Date of filing: **26.02.88**

(86) International application number:
**PCT/JP88/00216**

(87) International publication number:
**WO 89/08086 (08.09.89 89/21)**

(54) **HIGH-STRENGTH, -g(b)-TYPE SILICON CARBIDE SINTER AND PROCESS FOR ITS PRODUCTION.**

(43) Date of publication of application:
**11.04.90 Bulletin 90/15**

(45) Publication of the grant of the patent:
**19.04.95 Bulletin 95/16**

(84) Designated Contracting States:
**BE DE FR GB IT NL**

(56) References cited:
JP-A- 0 526 716
JP-A-60 186 467
US-A- 4 004 934

(73) Proprietor: **IBIDEN CO, LTD.**
**1, Kanda-cho 2-chome**
**Ogaki-shi**
**Gifu 503 (JP)**

(72) Inventor: **YAMAUCHI, Hidetoshi**
**8-1, Ohaza-Nishinoho**
**Godo-cho**
**Anpachi-gun**
**Gifu 503-23 (JP)**
Inventor: **HASEGAWA, Haruhisa**
**238, Kyutoku-cho**
**Ohgaki-shi**
**Gifu 503 (JP)**
Inventor: **HIRAMATSU, Yasuji**
**238, Kyutoku-cho**
**Ohgaki-shi**
**Gifu 503 (JP)**

(74) Representative: **Jenkins, Peter David et al**
**PAGE WHITE & FARRER**
**54 Doughty Street**
**London WC1N 2LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates to a method of producing high-strength $\beta$-type silicon carbide sintered bodies.

Such $\beta$-type silicon carbide sintered bodies are useful as a ceramic adaptable for use in high-temperature structural members requiring heat resistance, corrosion resistance, abrasion resistance and the like such as gas turbine and engine parts.

As regards a technique for the production of high-density, high-strength silicon carbide sintered bodies, there has hitherto been proposed a method described in Japanese Patent Application Publication No. 57-32,035 in which $\beta$-type silicon carbide (hereinafter abbreviated as "$\beta$-SiC") powder is used as a starting material and fared together with boron (B) compound and carbon (C) compound as a sintering aid, a method of using $\alpha$-type silicon carbide (hereinafter abbreviated as "$\alpha$-SiC") powder as a starting material as described in Japanese Patent Application Publication No. 58-14,390, and the like.

In case of the aforementioned conventional techniques, the high density is realized, but the control of $\beta \rightarrow \alpha$ transformation and the control of crystal grain growth at the firing stage are insufficient and hence the strength of the resulting sintered body is insufficient for putting into practical use.

US-A-4004934 discloses a sintered dense silicon carbide with high theoretical density.

JP-A-60-186467 discloses silicon carbide sintered bodies in which plate shaped crystals of $\alpha$-type silicon carbide are formed in the sintering process, this causing degradation in the strength after repetitive heating.

The invention has been developed to overcome the problems of the prior art and aims to establish a technique for the production of $\beta$-SiC sintered bodies having high density and high strength in which the crystal composition of the sintered body is substantially $\beta$ phase.

The present invention provides a method of producing a high-strength $\beta$-type silicon carbide sintered body, characterised by the steps of:- (a) providing a starting material including, in combination, $\beta$-type silicon carbide powder; elementary boron or a boron compound providing a boron content of from 0.15 to 0.28 wt% based on the weight of the starting material; elementary carbon or a carbon compound providing a free carbon content of from 1.5 to 3.0 wt% based on the weight of the starting material; (b) forming the starting material into a shaped body, the forming step being carried out so as substantially to prevent the inclusion of metal impurities or $\alpha$-type silicon carbide into the starting material and (c) heating the shaped body within a temperature range of from 1,200 to 1,600°C under vacuum or in a non-oxidizing atmosphere for from 1 to 3 hours and then heating the shaped body up to a sintering temperature of not lower than 1,900°C by raising the temperature at a rate of from 0.3 to 2.5°C/min, and thereafter holding the shaped body at the sintering temperature, and wherein the sintered body has average grain size of not more than 15 $\mu$m and a content of $\alpha$-type silicon carbide of not more than 5 vol%.

Preferably, the sintering temperature is from 1,950 to 2,150°C.

The range of boron content in accordance with the invention is 0.15 to 0.28 wt% based on the weight of the starting material.

When B is too low, B is difficult to be uniformly distributed over a whole of SiC powder and the uniform growth of crystal grain is obstructed, so that the sintered body having a high density is not obtained. On the other hand, when the remaining amount of B is too high, the density becomes high, but coarse crystal grains produce due to the non-uniform growth of crystal grain to provide $\beta$-SiC sintered body having a high $\alpha$-SiC content. Though this cause is not clear, it is considered that when B is existent in too high an amount, the excessive boron is unevenly distributed and there is a great difference in the grain growth rate between SiC particles at the unevenly distributed portion and SiC particles at non-distributed portion.

As the B source added as a sintering aid in the sintering, use may be made or elementaly boron, boron carbide, boron nitride and organoboron compounds. When using boron, baron carbide and baron nitride, it is preferable to have an average particle size or not more than 10 $\mu$m, and particularly it is favorable to have an average particle size of not more than 1 $\mu$m and a specific surface area or not less than 5 $m^2/g$.

There are many reports on the action of C at the sintering stage of SiC through pressureless sintering process. According to the inventors' study, it has been elucidated that such C controls the growth of SiC particles and prevents the formation of coarse grain to conduct uniform grain growth.

The range of carbon content in accordance with the invention is 1.5 to 3.0 wt% based on the weight of the starting material.

However, when C is too low, it is difficult to stably obtain the high-density sintered body and also the growth of crystal grains becomes non-uniform and further the content of $\alpha$-SiC phase becomes high. On the other hand, when C is too high, the high-density sintered body is not obtained and also the oxidation resistance lowers. Therefore, in order to uniformly grow SiC particles and control the $\alpha$-SiC content to not more than 5 vol%, the C amount should be 1.5 to 3.0 wt%.

As the C source added as a sintering aid, use may be made of fine powder of solid-like carbon such as carbon black, acetylene black, coke or the like; and compounds producing carbon through thermal decomposition such as phenolic resins, acrylic resins, ethylcellulose or the like. When using the solid-like carbon, it is desirable to have an average particle size of not more than 1 $\mu$m, and is more preferable to have a size of not more than 0.1 $\mu$m and a specific surface area of not less than 30 $m^2/g$.

Then, the production method of $\beta$-SiC sintered body according to the second invention will be explained.

As a starting material, $\beta$-SiC powder should be used having $\alpha$-SiC content of not more than 5 vol%. Because $\alpha$-SiC is high-temperature type of SiC crystal and hardly transforms from $\alpha$ to $\beta$ of low-temperature type in the firing. Therefore, considering that $\alpha$-phase in the sintered body should be not more than 5 vol%, the upper limit in the starting material is naturally not more than 5 vol%, and it is preferable to be not more than 1.0 vol%.

The amount of $\alpha$-phase in the sintered body should be limited to not more than 5 vol% for the following reasons.

In $\alpha$-SiC crystal, the crystalline structure is a hexagonal system or a rhombohedral system and the thermal expansion coefficient is dependent upon the crystal orientation, so that in the sintered body containing a large amount of $\alpha$-SiC, a residual stress based on the difference of thermal expansion coefficient is produced and it is difficult to obtain a high strength; and

When $\beta$-SiC crystal phase is transformed into $\alpha$-SiC crystal phase, coarse crystal of not less than 100 $\mu$m is apt to grow and the stress concentrates in this coarse crystal to cause the decrease of the strength.

As $\beta$-SiC powder used herein, use may be made of powders synthesized by reduction of silica, direct reaction between Si and C, CVD reaction between $SiC\ell_4$ and $CH_4$, thermal decomposition of polycarbosilane and the like. As the preferable properties of this powder, the average particle size is not more than 1.0 $\mu$m, the specific surface area is not less than 5 $m^2/g$, the oxygen content is not more than 1.0 wt%, and the content of metal impurities other than Si is not more than 0.2 wt% in total.

Then, boron (B) and carbon (C) and, if necessary, a solvent are added and mixed with the above $\beta$-SiC. The resulting mixture is necessary to be uniformly mixed, dried and shaped under a condition that the inclusion of metal impurity and $\alpha$-SiC is not more than 0.1 wt%.

When the metal impurity exceeds 0.1 wt%, the concentration of metal impurity in the mixture becomes high, and the abnormal grain growth and formation of $\alpha$-SiC are caused during the sintering. This cause differs in accordance with the kind of metal, but is considered due to the fact that the presence of metal forms the liquid phase of low melting point or accelerates the diffusion of Si or C. Moreover, the term "metal impurity" used herein means metals other than Si bonding to C as SiC.

When $\alpha$-SiC powder is included into the starting material in an amount of more than 0.1 wt%, the amount of $\alpha$-SiC included in the resulting sintered body becomes very large. Because the included $\alpha$-SiC acts as a nucleus to cause the rapid transformation of $\beta$-SiC to $\alpha$-SiC.

As previously mentioned, the inclusion of metal impurity and $\alpha$-SiC is apt to be caused at the mixing, drying and shaping steps. Particularly, the metal impurity is liable to be included from a mixer used in the mixing step. When the mixer is made from SiC sintered body containing $\alpha$-type phase, the inclusion of $\alpha$-SiC occurs.

In order to prevent the inclusion of these metal impurity and $\alpha$-SiC, it is preferable to use a mixer made from an organic material having a very small metal impurity, such as nylon, Teflon (Registered Trade Mark), vinyl resin or the like.

In the mixing and shaping, the sintering aid such as B, C or the like is particularly necessary to be uniformly mixed with $\beta$-SiC powder. Because, when the mixing is non-uniform the action of B or C becomes non-uniform and the uniform growth in the sintering is impossible and the coarse grains or $\alpha$-type grains are produced. In order to satisfy this requirement, a ball mill, oscillation mill or the like is used, and in this case, it is further preferable to use a solvent such as water, alcohol, benzene, acetone or the like.

The average crystal grain size should be limited to not more than 15 $\mu$m;

When the average crystal grain size of the sintered body exceeds 15 $\mu$m, the stress concentration is caused in each of the crystal grains to cause the decrease of the strength. It is preferably not more than 10 $\mu$m on average and the maximum grain size is not more than 30 $\mu$m.

Then, the shaped body is sintered at a maximum temperature of preferably 1,950~2,150°C under vacuum or in a non-oxidizing atmosphere.

Thus, $\beta$-type silicon carbide sintered bodies having high density and strength are obtained. If $\alpha$-SiC is existent in a slight amount, there is a fear that the satisfactory effect of improving the strength is not obtained due to this fact.

In this connection, the inventors have made further studies and accomplished the third invention.

The progress of the third invention and the concrete contents of the means for solving the above subject matter, particularly condition of mixed starting material will be explained below.

In general, it is very difficult to sinter $\beta$-SiC into a homogeneous and fine microstructure by subjecting it to a heat treatment. Further, it is apt to cause abnormal grain growth while transformation into $\alpha$-SiC when the sintering temperature is raised for high densification. The abnormal growth of crystal grain is liable to make defects in the sintered body, resulting in the reduction of the strength of the sintered body. Furthermore, since $\alpha$-SiC has an anisotropy, it is apt to leave residual strain in the sintered body, resulting in the lowering of the strength of the sintered body. For these reasons, the sintered body is preferable to have a homogeneous and fine microstructure of $\beta$-SiC containing no $\alpha$-SiC. However, even when the density of the resulting conventional sintered body is not less than 95% of theoretical density, the sintered body having a crystalline phase of about 100% $\beta$-SiC is not obtained.

In this point, the inventors have made various studies and considered that the $\beta \rightarrow \alpha$ transformation of crystal phase in the sintering is caused due to not only the fact that $\alpha$-SiC is stable at a high temperature but also the presence of metal impurities such as Fe, A$\ell$ and the like contained in the powder. Therefore, the inventors have made further studies with respect to this point and found that there are existent SiC powder easily causing the transformation and SiC powder hardly causing the transformation.

That is, when the powder easily causing the transformation was observed by means of a transmission type electron microscope, an electron beam diffraction pattern of 6H type SiC was recognized. However, when the powder hardly causing the transformation was observed in the same manner, a clear diffraction pattern of $\beta$-SiC or a streak diffraction pattern of $\beta$-SiC was only recognized, and the diffraction pattern of $\alpha$-SiC was not recognized. Further, when both powders were observed by X-ray diffractometry, there was recognized no diffraction pattern of $\alpha$-SiC such as 6H, 15R, 4H or the like.

From the above, the inventors have anticipated that the transformation is accelerated by a slight amount of $\alpha$-SiC crystal existent in $\beta$-SiC powder.

Now, the inventors have aimed at the use of pure $\beta$-SiC powder containing no $\alpha$-SiC crystal of 4H, 6H, 15R or the like as a starting material, and made various experiments and found to obtain sintered bodies having a density corresponding to not less than 90% of theoretical density and a $\beta$-SiC content of not less than 95%.

Further, boron (B) is used as a sintering aid for such a pure $\beta$-SiC powder starting material. The addition amount of B is suitable within a range of 0.1~2.0 wt%. Preferably, it is 0.1~0.3 wt%. When the addition amount of B is less than 0.1 wt% or more than 2.0 wt%, the given density of the sintered body is not obtained. Moreover, carbon (C) is used as the other sintering aid for the starting material, wherein the addition amount of C is suitable within a range of 1.0~5.0 wt%. Preferably, it is 2.0~3.0 wt%. When the addition amount of C is less than 1.0 wt% or more than 5.0 wt%, the given density is not obtained.

Moreover, as $\beta$-SiC powder usable in the invention, an example of powder produced by silica reduction process is preferable to have the following:

F-SiO$_2$: not more than 0.4%, F-C: not more than 0.65%,

T-Fe: not more than 0.08%, T-A$\ell$: not more than 0.08%,

T-Ca: not more than 0.08%, H$_2$O: not more than 0.70%,

average grain size: not more than 0.3 $\mu$m,

submicron ratio: not less than 94%,

maximum grain size: 2 $\mu$m, specific surface are:

15~22 m$^2$/g

Then, the starting powder having the above preferable composition is shaped and subjected to a heat treatment. The sintering temperature in this heat treatment is suitable within a range of 1,800~2,150°C. When the temperature is lower than 1,800°C, the given density is not obtained, while when it is higher than 2,150°C, the transformation to $\alpha$-SiC becomes large and the finally required content of $\beta$-type crystal phase is not obtained and also the desired strength can not be realized.

Although the above has been described with respect to the means for improving the strength from a viewpoint of the composition of the starting material and the compounding ratio of the sintering aid, the improvement of the strength can be achieved by applying a particular means to the production step of the sintered body.

That is, the fourth invention is based on the following knowledge for the sintering mechanism of $\beta$-SiC powder, i.e. a knowledge that it is fundamentally effective to control the initial sintering condition at low temperature side as well as the last sintering condition at middle and high temperature sides.

The production conditions specifying the fourth invention, particularly sintering condition will be described below.

(1) The initial sintering stage of $\beta$-SiC powder lies in the heating within a temperature range of 1,200~1,600°C under vacuum 13.3~1.33 x $10^{-3}$ Pa ($10^{-1}$~$10^{-5}$ Torr) or in an inert gas atmosphere (Ar, $N_2$) for 1~3 hours in order to remove $SiO_2$ and other impurity oxide existent on the surface of the powder to obtain a uniform sintered body. When the temperature is lower than 1,200°C, the effect is small even under vacuum, while when it is higher than 1,600°C under vacuum, the decomposition of SiC is apt to be caused, resulting in the obstruction of surface densification. In this case, the temperature rising rate is desirable to be within a range of 10~1.25°C/min.

(2) At the subsequent middle and last sintering stages above 1,600°C, it is necessary to uniformize the shaped body so as not to cause the temperature difference between the surface and the interior thereof. For this purpose, it is effective to control the temperature rising rate to 0.3~2.5°C/min up to the sintering temperature above 1,900°C.

Thus, when the temperature rising rate at this stage is lower than 0.3°C/min, demerits are caused from a viewpoint of workability and cost, while when it is higher than 2.5°C/min, the crystal grain growth occurs and the transformation to $\alpha$-type becomes large.

Moreover, at the temperature region above 2,000°C in the last sintering stage, vacuum 13.3~1.33 x $10^{-3}$ Pa ($10^{-1}$~$10^{-5}$ Torr) is preferable for ensuring the control of $\beta \rightarrow \alpha$ transformation. In this case, the reprecipitation of evaporated SiC is prevented and the formation of $\alpha$-nucleus is suppressed at high temperature.

(3) In the cooling from the sintering temperature (maximum temperature), it is preferable that the cooling rate is maintained within a range of 0.3~5°C/min for preventing the $\beta \rightarrow \alpha$ transformation.

Upon the production of the SiC sintered body adopting the above mentioned sintering conditions (1) and (2) and if, necessary (3), the crystal microsturcture of the resulting sintered body is further made uniform and fine as compared with that of the conventional SiC sintered body and the $\beta \rightarrow \alpha$ transformation is suppressed to lessen the defects, whereby the $\beta$-SiC sintered body having excellent wear resistance and strength is obtained.

Embodiments of the present invention will now be described with reference to the accompanying drawings, in which:-

Fig. 1 is an X-ray diffraction chart of the starting powder used in Example 8;

Fig. 2 is an X-ray diffraction chart of the starting powder used in Comparative Example 7; and

Fig. 3 is an X-ray diffraction chart of the starting powder used in Comparative Example 8.

Examples 1~5, Comparative Examples 1~6

To $\beta$-SiC powder synthesized by silica reduction process and having composition and properties shown in a~c of Table 1 were added boron carbide having a maximum grain size of not more than 10 $\mu$m and a specific surface area of 5 $m^2$/g and resol-type phenolic resin (residual carbon ratio 50%) as a sintering aid in a compounding ratio shown in Table 2, and further 300 parts of water as a solvent was added, which were mixed by means of various mixers shown in Table 2 for a given time. The drying was carried out by means of a spray dryer. The resulting granulates were shaped in a mold at 150 kg/$cm^2$ and then subjected to rubber press at 3 t/$cm^3$ to obtain a shaped body.

Then, the above shaped body was dried and then fired. The firing was carried out by raising temperature up to 1,500°C at a rate of 5°C/min under vacuum of 1.33 Pa (1 x $10^{-2}$ Torr), holding the temperature of 1,500°C for 1 hour, returning the inside of the furnace to atmospheric pressure with argon gas, raising temperature up to 2,090°C at a rate of 1.25°C/min under atmospheric pressure while flowing argon gas at a rate of 5 $\ell$/min into the furnace, holding this temperature for about 1 hour and then cooling.

In the resulting sintered body, the density was measured by an Archimedes' method and the three-point flexural strength was measured according to a method of JIS R1601. Further, a Kawamura's equation was applied to the quantitative determination of polymorphism because only peaks of 3C and 6H were recognized in the X-ray diffraction pattern (conditions for X-ray diffraction were voltage: 40 kV, current: 100 mA, $2\theta$ : 32~43°, scan speed: 1/4°/min, time constant: 5 sec., chart speed: 1 cm/min, full scale: 20,000 cps., provided that there was a weak unknown peak at $2\theta = 33.6$° in the X-ray diffraction patterns of powder and sintered body).

The measured properties of the sintered body are shown in the following Table 2.

Table 1

| No. | Chemical composition | | | | Powder properties | | | α-type content (vol %) |
|-----|---------------------|---|---|---|-------------------|---|---|--------------------|
| | F.SiO$_2$ (wt%) | F.C (wt%) | Al (wt%) | Fe (wt%) | average grain size ($\mu$m) | submicron content (%) | specific surface area (m$^2$/g) | |
| a | 0.30 | 0.42 | 0.05 | 0.06 | 0.28 | 95.5 | 18.9 | 0 |
| b | 0.70 | 0.26 | 0.02 | 0.02 | - | - | 52.2 | 0 |
| c | 0.33 | 0.40 | 0.03 | 0.07 | 0.29 | 96.1 | 18.2 | 5.1 |

Table 2

| No. | Production conditions | | | | | Sintering temperature (°C) | Sintered body | | |
|---|---|---|---|---|---|---|---|---|---|
| | β-SiC powder | Addition amount of sintering aid B (wt%) | C (wt%) | Mixing means | time (H) | | Density (%) | α-type content (vol %) | Flexural strength (kgf/mm²) |
| Example 1 | a | 0.25 | 2.0 | Teflon* ball mill | 24 | 2090 | 98 | 2.3 | 77.0 |
| 2 | a | 0.2 | 2.0 | " | = | 2090 | 97 | 0 | 72.1 |
| 3 | a | 0.15 | 1.5 | " | = | 2090 | 96 | 1.5 | 65.2 |
| 4 | a | 0.2 | 2.0 | nylon attritor | 20 | 2060 | 98 | 2.1 | 78.0 |
| 5 | b | 0.28 | 2.0 | " | = | 1950 | 96 | 0 | 66.0 |
| Comparative Example 1 | a | 0.05 | 2.0 | Teflon* ball mill | 24 | 2090 | 85 | 3.3 | 38.0 |
| 2 | a | 0.2 | 2.0 | agate mortar | 1 | 2090 | 96 | 7.7 | 47.5 |
| 3 | a | 0.7 | 0.5 | stainless attritor | 20 | 2090 | 99 | 10.0 | 56.6 |
| 4 | a | 0.7 | 3.0 | " | = | 2150 | 99 | 16.0 | 45.9 |
| 5 | a | 0.15 | 2.5 | SiC ball mill | 24 | 2070 | 95 | 35.0 | 44.0 |
| 6 | c | 0.2 | 2.0 | Teflon* ball mill | = | 2090 | 98 | 41.0 | 42.2 |

* = Registered Trade Mark.

Moreover, as regards an example adopting the same compounding recipe and shaping condition as in Example 1, the shaped body was dried at 100°C, directly heated from room temperature to 2,090°C at a temperature rising rate of 5°C/min, held at this temperature for 1 hour and then cooled. In this case, the atmosphere was always maintained by flowing argon gas at a rate of 5 ℓ/min under atmospheric pressure.

The thus obtained sintered body had a density of 98%, an $\alpha$-type content of 4 vol% and a flexural strength of 71.0 kgf/mm$^2$.

Example 6

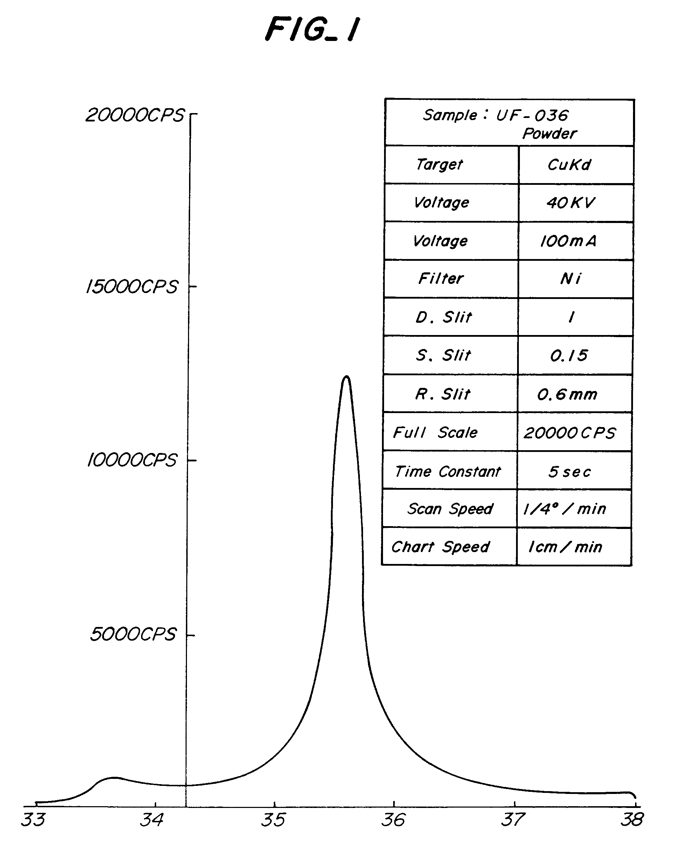

$\beta$-SiC powder synthesized by silica reduction method as shown in the following Table 3 was used as a starting material. This powder had an X-ray diffraction pattern as shown in Fig. 1. To 100 parts by weight of this $\beta$-SiC powder were added 0.32 part by weight of boron carbide (B$_4$C) having a maximum grain size of not more than 10 $\mu$m and a specific surface area of 5 m$^2$/g and 4.0 parts by weight of resol-type phenolic resin (residual carbon ratio 50%) as a sintering aid and 300 parts by weight of water as a solvent, which were mixed in a polyethylene container of 3 $\ell$ capacity filled with about 60% by volume of Teflon (Registered Trade Mark) balls for 24 hours. The drying was carried out by means of a spray dryer. The thus obtained granulates were shaped in a mold under a pressure of 150 kg/cm$^2$ and then shaped by means of a rubber press at 3 t/cm$^2$.

The shaped body was dried and then subjected to a heat treatment (sintering). The sintering was carried out by raising temperature up to 1,500°C at a rate of 5°C/min under vacuum of 1.33 Pa (1 x 10$^{-2}$ Torr) and holding the temperature of 1,500°C for 1 hour. Thereafter, the inside of the furnace was rendered into atmospheric pressure with argon gas, and the temperature was raised up to 2,090°C at a rate of 1.25°C/min under atmospheric pressure while flowing argon gas at a rate of 5 $\ell$/min and held at 2,090°C for 1 hour and then cooled.

The properties of the thus obtained sintered body are shown in the following Table 4. The measurement of these properties were the same as in Examples 1~5.

Table 3

| Starting ($\beta$-SiC) powder | | | | | | | |
|---|---|---|---|---|---|---|---|
| F.SiO$_2$ | F.C | T.A$\ell$ | T.Fe | Average grain size | Submicron content | Specific surface area | $\alpha$-type content |
| 0.03% | 0.42% | 0.05% | 0.06% | 0.28 $\mu$m | 95.5% | 18.9 cm$^2$/g | 0 vol % |

Table 4

| Density of sintered body | | 3.15 g/cm$^3$ |
|---|---|---|
| Crystal size | average | 3~5 $\mu$m |
| | maximum | 7~10 $\mu$m |
| Polymorphism composition | $\beta$ | 100 vol% |
| | $\alpha$ | 0 |
| Average flexural strength | | 77.0 kgf/mm$^2$ |

Comparative Example 7

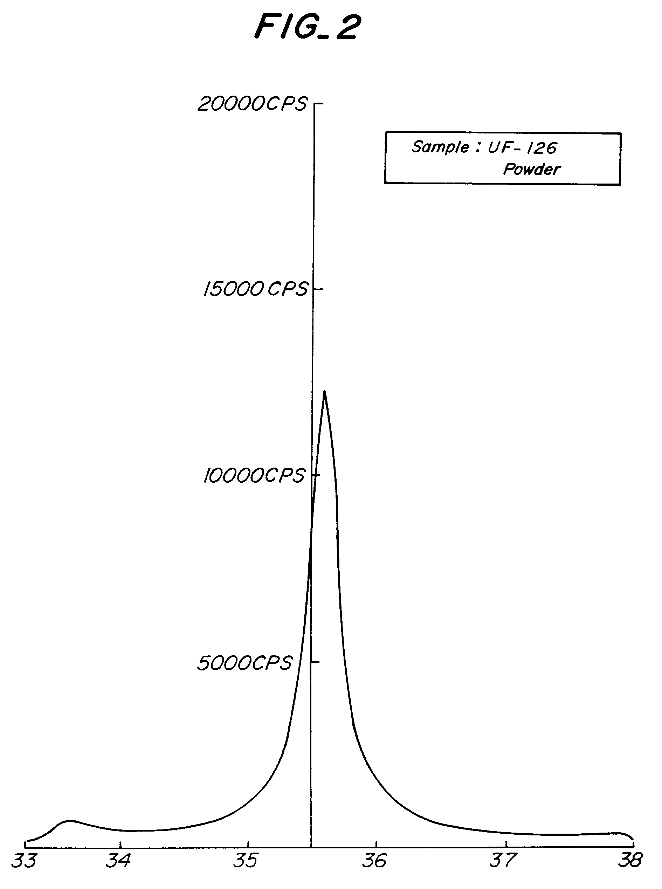

There was provided SiC powder as shown in the following Table 5, in which the presence of $\alpha$-SiC crystal phase was confirmed, among $\beta$-SiC powder synthesized by the same silica reduction method as in Example 6. The chart of this powder through X-ray diffraction was shown in Fig. 2. This $\beta$-SiC powder containing $\alpha$-phase was fired in the same manner as in the above example to produce the sintered body.

The thus obtained sintered body had a density of 3.14 g/cm$^3$ and contained 15% of $\alpha$-SiC and 85% of $\beta$-SiC. The average grain size as a crystal size was 10~15 $\mu$m, and the maximum grain size was 50 $\mu$m, and the average strength was 55.4 kgf/mm$^2$.

8

Table 5

| F.SiO$_2$ | F.C | T.Fe | T.Aℓ | Average grain size | Specific surface area |
|---|---|---|---|---|---|
| 0.36% | 0.49% | 0.05% | 0.03% | 0.28 μm | 18.7 cm$^2$/g |

Comparative Example 8

$\beta$-SiC powder synthesized by the same silica reduction method as in Example 6 and containing $\alpha$-SiC crystal confirmed by X-ray diffraction was sintered in the same manner as in Example 6 to obtain a sintered body. This sintered body had a density of 3.15 g/cm$^3$ and contained 60% of $\alpha$-SiC and 40% of $\beta$-SiC. The crystal size was an average grain size of 10~15 μm and a maximum grain size of 300 μm, and the average strength was 48.6 kgf/mm$^2$.

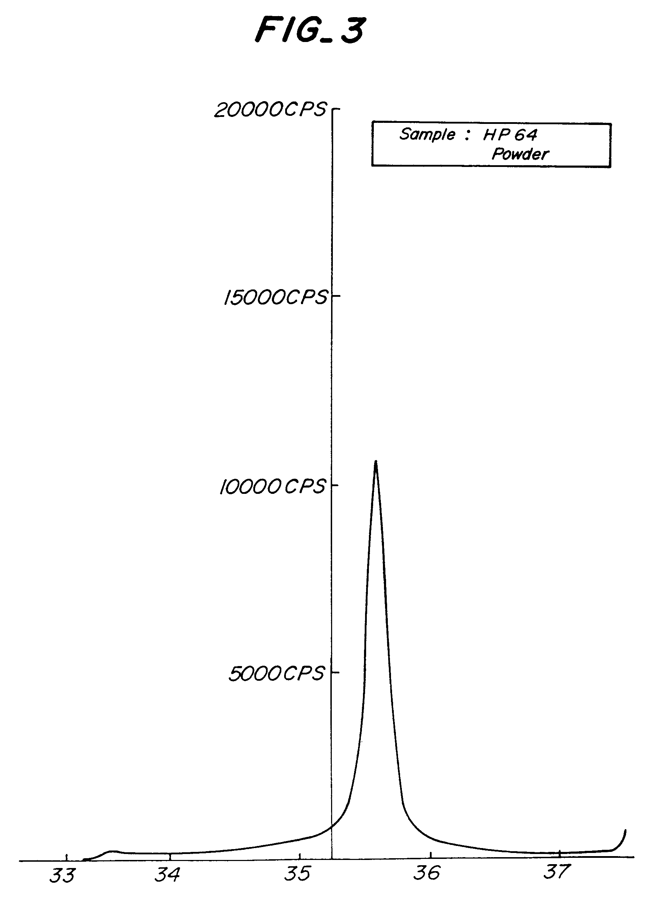

Moreover, the chart of the starting material through X-ray diffraction is shown in Fig. 3.

Comparative Example 9

The same $\beta$-SiC powder as in Example 6 was separately added with 3 wt% of $\alpha$-SiC (A-I, made by Showa Denko K.K.), which were sintered in the sane manner as in Example 6 to obtain a sintered body. This sintered body had a density of 3.12 g/cm$^3$ and contained 50% of $\alpha$-SiC and 50% of $\beta$-SiC.

Examples 7-13

99.68 wt% of $\beta$-SiC powder having an average grain size of 0.27 μm as a starting material and 0.32 wt% of B$_4$C as a sintering aid were used. To this mixture were added 4.0 wt% (outer amount) of phenolic resin and 300 wt% (outer amount) of benzene, which were placed in a ball mill and mixed for 24 hours, and then dried by means of a spray dryer. The thus obtained granulates were shaped in a mold and rubber pressed at 3 t/cm$^2$. Then, the shaped body was dried at 100°C and sintered.

As shown in the following Table 6, the sintering was carried out by raising temperature up to 1,500°C at a rate of 5°C/min in an Ar gas atmosphere or under vacuum, holding the temperature of 1,500°C for 1 hour, purging with Ar gas, raising temperature up to 2,090°C at a range of 0.3~1.25°C/min while flowing Ar gas at a rate of 5 ℓ/min, holding this temperature for 1 hour and then cooling at a rate of 2.5°C/min.

Moreover, the effect when changing the inside from Ar gas to vacuum at a temperature region above 2,000°C was examined to obtain results as shown in the following Table 7. And also, the effect of the cooling rate was examined to obtain results as shown in the following Table 8.

Table 6

| | Sintering conditions | | | | | | Density of sintered body *1 (g/cm$^3$) | Average crystal grain size (µm) | Maximum crystal grain size (µm) | Crystal composition *2 (vol %) | | | Three-point flexural strength *3 (kgf/mm$^2$) |
|---|---|---|---|---|---|---|---|---|---|---|---|---|---|
| | low temperature side | | | high temperature side | | | | | | | | | |
| | temperature (°C) | rising rate (°C/min) | atmosphere (Torr)# | temperature (°C) | rising rate (°C/min) | atmosphere (Torr)# | | | | 3C | 6H | 4H | |
| Example 7 | 1500 | 5 | $10^{-2}$ | 2090 | 1.25 | Ar | 3.15 | 3~5 | 7~10 | 97.7 | 2.3 | 0 | 77.0 |
| Example 8 | 1500 | 5 | $10^{-2}$ | 2090 | 0.3 | Ar | 3.15 | 5~7 | 10~12 | 96.8 | 3.2 | 0 | 70.5 |
| Example 9 | 1500 | 5 | Ar | 2090 | 1.25 | Ar | 3.14 | 5~7 | 10~12 | 97.5 | 3.5 | 0 | 72.0 |
| | | | | | | | | | | | | | |
| Example 10 | 1500 | 5 | $10^{-2}$ | 2090 | 1.25 | $10^{-2}$ | 3.13 | 3~5 | 7~10 | 100 | 0 | 0 | 81.0 |
| | | | | | | | | | | | | | |

*1 Density of sintered body : Archimedes' method

*2 Crystal composition : Quantitative determination of crystal form is measured according to Kawamura's method from peak strength through X-ray diffraction.

*3 Three-point flexural strength; according to a method of JIS R1601

# $10^{-2}$ Torr = 1.33 Pa

EP 0 362 375 B1

Table 7 Effect under vacuum above 2,000°C

| | Sintering conditions | | | Density of sintered body *1 (g/cm3) | Average crystal grain size (µm) | Maximum crystal grain size (µm) | Crystal composition *2 (vol %) | | | Three-point flexural strength *3 (kgf/mm2) |
|---|---|---|---|---|---|---|---|---|---|---|
| | temperature (°C) | rising rate (°C/min) | atmosphere (Torr) # | | | | 3C | 6H | 4H | |
| Example 11 | 2,090 | 1.25 | Ar up to 2,000°C, 10-2 above 2,000°C | 3.15 | 3~5 | 7~10 | 99.0 | 1.0 | 0 | 78.5 |

*1 ~ *3: same as described above

# $10^{-2}$ Torr = 1.33 Pa

## Table 8　Effect under cooling condition

| | Sintering conditions | | | | Density of sintered body *1 (g/cm³) | Average crystal grain size (μm) | Maximum crystal grain size (μm) | Crystal composition *2 (vol %) | | | Three-point flexural strength *3 (kgf/mm²) |
|---|---|---|---|---|---|---|---|---|---|---|---|
| | temperature (°C) | rising rate (°C/min) | cooling rate (°C/min) | atmosphere | | | | 3C | 6H | 4H | |
| Example 12 | 2,090 | 1.25 | 25 | Ar | 3.15 | 3~5 | 7~10 | 97.5 | 2.5 | 0 | 73.0 |
| Example 13 | 2,090 | 1.25 | 5 | Ar | 3.15 | 3~5 | 6~8 | 99.0 | 1.0 | 0 | 79.0 |

*1 ~ *3 ; same as described above

Comparative Examples 10~13

The sane β-SiC powder and sintering aid as in Example 7 were used, and the temperature was directly raised up to the sintering temperatures at a rate of 0.1~10°C/min without dividing only the firing conditions

12

on the temperature raising and the holding of heating temperature into two stages as a comparative example, and the properties of the thus obtained sintered body under the above conditions are shown in the following Table 9.

As seen from the results of the above examples and comparative examples, according to the production method of the invention, SiC sintered bodies having a high strength ($\geqq$70 kgf/cm$^2$), a uniform and fine crystal microstructure and a low $\alpha$-formation ratio are obtained.

Table 9

| | Sintering conditions | | | Density of sintered body (g/cm³) | Average crystal grain size (μm) | Maximum crystal grain size (μm) | Polymorphism composition (vol %) | | | Three-point flexural strength (kgf/mm²) |
| | temperature (°C) | rising rate (°C/min) | atmosphere | | | | 3C | 6H | 4H | |
|---|---|---|---|---|---|---|---|---|---|---|
| Comparative Example 10 | 2150 | 1.25 | Ar | 3.16 | 10~15 | 300 | 79.2 | 18.0 | 2.8 | 46.0 |
| Comparative Example 11 | 2090 | 10 | Ar | 3.13 | 10~15 | 100 | 93.0 | 7.0 | 0 | 52.3 |
| Comparative Example 12 | 2090 | 5 | Ar | 3.14 | 7~10 | 20~30 | 93.7 | 6.3 | 0 | 57.3 |
| Comparative Example 13 | 2090 | 0.1 | Ar | 3.13 | 7~10 | 30~50 | 91.4 | 8.6 | 0 | 54.8 |

According to the invention, $\beta$-SiC sintered bodies having a uniform and fine crystal microstructure and a high strength can easily be obtained, which are advantageously adaptable for use in high-temperature structural members requiring not only high strength but also heat resistance, corrosion resistance, wear resistance and the like.

## EP 0 362 375 B1

### Claims

1. A method of producing a high-strength β-type silicon carbide sintered body, characterised by the steps of:- (a) providing a starting material including, in combination, β -type silicon carbide powder; elementary boron or a boron compound providing a boron content of from 0.15 to 0.28 wt% based on the weight of the starting material; elementary carbon or a carbon compound providing a free carbon content of from 1.5 to 3.0 wt% based on the weight of the starting material; (b) forming the starting material into a shaped body, the forming step being carried out so as substantially to prevent the inclusion of metal impurities or α-type silicon carbide into the starting material and (c) heating the shaped body within a temperature range of from 1,200 to 1,600 °C under vacuum or in a non-oxidizing atmosphere for from 1 to 3 hours and then heating the shaped body up to a sintering temperature of not lower than 1,900 °C by raising the temperature at a rate of from 0.3 to 2.5 °C/min, and thereafter holding the shaped body at the sintering temperature, and wherein the sintered body has average grain size of not more than 15 μm and a content of α-type silicon carbide of not more than 5 vol%.

2. A method according to claim 1, wherein the sintering temperature is from 1,950 to 2,150 °C.

### Patentansprüche

1. Verfahren zum Herstellen eines hochfesten β-Typ-Siliziumkarbid-Sinterkörpers, gekennzeichnet durch folgende Schritte: (a) Bereitstellen eines Ausgangsmaterials, das in Kombination β-Typ-Siliziumkarbidpulver, elementares Bor oder eine Borverbindung bei einem Borgehalt von 0,15 bis 0,28 Gew.-%, bezogen auf das Gewicht des Ausgangsmaterials, elementaren Kohlenstoff oder eine Kohlenstoffverbindung bei einem freien Kohlenstoffgehalt von 1,5 bis 3,0 Gew.-%, bezogen auf das Gewicht des Ausgangsmaterials, enthält; (b) Formen des Ausgangsmaterials zu einem Formkörper, wobei das Formen derart durchgeführt wird, daß der Einschluß von Metallverunreinigungen oder α-Typ-Siliziumkarbid in das Ausgangsmaterial verhindert wird; und (c) Erhitzen des Formkörpers innerhalb eines Temperaturbereichs von 1200 bis 1600 °C unter Vakuum oder in einer nichtoxidierenden Atmosphäre für 1 bis 3 Stunden und sodann Erhitzen des Formkörpers bis auf eine Sintertemperatur von nicht unter 1900 °C durch Steigern der Temperatur mit einer Geschwindigkeit von 0,3 bis 2,5 °C/min und sodann halten des Formkörpers auf der Sintertemperatur, wobei der Sinterkörper eine durchschnittliche Korngröße von nicht mehr als 15μm und einen Gehalt an α-Typ-Siliziumkarbid von nicht mehr als 5 Vol.-% aufweist.

2. Verfahren nach Anspruch 1, bei welchem die Sintertemperatur von 1950 bis 2150 °C beträgt.

### Revendications

1. Procédé de production d'un corps fritté en carbure de silicium de type β de grande resistance mécanique, caractérisé par les étapes qui consistent : (a) à prendre une matière de départ contenant, en association, du carbure de silicium en poudre du type β ; du bore élémentaire ou un composé de bore apportant une teneur en bore de 0,15 à 0,28 % en poids sur la base du poids de la matière de départ ; du carbone élémentaire ou un composé de carbone apportant une teneur en carbone libre de 1,5 à 3,0 % en poids sur la base du poids de la matière de départ ; (b) à faire prendre à la matière de départ la configuration d'un corps façonné, l'étape de formage étant conduite de manière à empêcher principalement l'inclusion d'impuretés métalliques ou de carbure de silicium du type α dans la matière de départ et (c) à chauffer le corps façonné dans une plage de température de 1200 à 1600 °C sous vide ou dans une atmosphère non oxydante pendant 1 à 3 heures, puis à chauffer le corps façonné jusqu'à une température de frittage non inférieure à 1900 °C par élévation de la température à une vitesse de 0,3 à 2,5 °C/minute, après quoi le corps façonné est maintenu à la température de frittage, ce corps fritté ayant une grosseur moyenne de grain ne dépassant pas 15 μm et une teneur en carbure de silicium du type α ne dépassant pas 5 % en volume.

2. Procédé suivant la revendication 1, dans lequel la température de frittage va de 1950 à 2150 °C.

# FIG_1

| Sample : UF-036 Powder | |
|---|---|
| Target | CuKd |
| Voltage | 40 KV |
| Voltage | 100 mA |
| Filter | Ni |
| D. Slit | 1 |
| S. Slit | 0.15 |
| R. Slit | 0.6 mm |
| Full Scale | 20000 CPS |
| Time Constant | 5 sec |
| Scan Speed | 1/4° / min |
| Chart Speed | 1cm / min |

# FIG. 2

# FIG. 3

Sample : HP 64 Powder